Europäisches Patentamt

European Patent Office

Office européen des brevets

(19)

(11) **EP 0 841 432 A1**

(12) **EUROPÄISCHE PATENTANMELDUNG**

(43) Veröffentlichungstag:
13.05.1998 Patentblatt 1998/20

(21) Anmeldenummer: 97118484.1

(22) Anmeldetag: 24.10.1997

(51) Int. Cl.[6]: **D21H 19/24**, C08J 5/18,
C08G 18/08, C08G 18/42,
C08G 18/28, C08G 18/10,
C08G 18/83
// C08L75:04

(84) Benannte Vertragsstaaten:
AT BE CH DE DK ES FI FR GB GR IE IT LI LU MC
NL PT SE

(30) Priorität: 06.11.1996 DE 19645663

(71) Anmelder: BAYER AG
51368 Leverkusen (DE)

(72) Erfinder:
• Müller, Hanns-Peter, Dr.
51519 Odenthal (DE)
• Träubel, Harro, Dr.
51373 Leverkusen (DE)
• Koch, Rainhard, Dr.
51065 Köln (DE)

(54) **Biologisch abbaubare und kompostierbare Formkörper**

(57) Die Verwendung von Dispersionen von Harnstoffgruppen aufweisenden Polyurethanen auf Basis ausgewählter Ausgangsmaterialien und Vernetzer führt zur Herstellung von vollständig biologisch abbaubaren Formkörpern.

EP 0 841 432 A1

**Beschreibung**

Die ältere deutsche Patentanmeldung 195 17 185.3 (= PCT-Patentanmeldung WO 96/1780) betrifft die Verwendung von wäßrigen Dispersionen von ausgewählten, Harnstoffgruppen aufweisenden Polyurethanen zur Herstellung von biologisch abbaubaren und kompostierbaren Formkörpern einschließlich Flächengebilden auf Basis cellulosischer Materialien.

Die vorliegende Erfindung betrifft die Verwendung von wäßrigen Dispersionen von Harnstoffgruppen aufweisenden Polyurethanen und Vernetzern zur Herstellung von biologisch abbaubaren und kompostierbaren Formkörpern einschließlich Flächengebilden, vorzugweise solcher auf Basis cellulosischer Materialien. Die Erfindung betrifft weiterhin Verbundmaterialien aus cellulosischen Naturstoffen, biologisch abbaubaren Harnstoffgruppen aufweisenden Polyurethanen und Vernetzern. Im nachfolgenden umfaßt der Begriff "Polyurethane" auch Polyurethanharnstoffe.

Vollständig biologisch abbaubare und kompostierbare Werkstoffe (BAW) gewinnen wirtschaftlich und technisch in Zukunft mehr und mehr an Bedeutung (T. Jopski, Kunststoffe 83 (1993), 10). Die große Herausforderung liegt darin, Kunststoffe herzustellen, die über die notwendige Funktionstüchtigkeit verfügen, sich aber unter Stimulierung einer biologisch aktiven Umgebung abgebaut werden können. Auslöser kann ein mikrobiologischer, enzymatischer, hydrolytischer, ein durch Licht bedingter oder oxidativer, an einer speziellen Stelle in der Hauptkette des Polymeren angreifender Abbau sein. Alle Abbauprodukte müssen sicher, untoxisch und in der Natur nicht akkumulierbar sein, d.h. einem vollständigen mikrobiellen Endabbau unterliegen. Bisher sind drei generelle Kategorien von BAW bekannt geworden. Polyester, Kunststoffe auf Basis von natürlichen Polymeren und andere abbaubare Kunststoffe, z.B. Polyvinylalkohol. Zu den Polyestern gehören Polymilchsäure, Polyhydroxybutyrat und -valeriat, Polycaprolacton sowie hochmolekulare aliphatische Polyester (EP-A 572 256). Um ausreichend hohe Molekulargewichte zu erreichen, werden die in der EP-A 572 256 genannten Polyester mit organischen Diisocyanaten zum Endprodukt verlängert. Die Verwendung thermoplastischer Polyesterurethane als kompostierbare Kunststoffe wird in der EP-A 593 975 beschrieben. Thermoplastisch verarbeitbare und biologisch abbaubare Polyesteramide sind Gegenstand der EP-A 641 917.

Biologisch abbaubare, thermoplastische Polyurethan-Filamente sind in der DE-PS 4 319 439 beschrieben. Die thermoplastisch verarbeitbaren Polyurethane sind linear, weisen in der Polymerkette eingebaute difunktionelle Polyesterdiole und difunktionelle Polyethylenglykole auf und werden unter Mitverwendung von Hexamethylendiisocyanat und Butandiol oder Hexandiol als Kettenverlängerer aufgebaut (Beispiele 1 bis 3, DE-PS 4 319 439).

Die Bioabbaubarkeit ist somit eine wichtige Größe für die oben genannten Verbundmaterialien. Auf der anderen Seite sollen die entsprechenden Produkte auch bestimmungsgemäße Eigenschaften aufweisen. Diese Eigenschaften spielen bei der Herstellung des Materials, seiner Weiterverarbeitung, seinem Gebrauch und seiner Entsorgung eine wichtige Rolle. Für Verpackungsmaterial sei beispielsweise erwähnt, daß das Material sich auf konventionellen Anlagen - möglichst, ohne daß Walzen oder andere Maschinenteile verschmutzt werden - verarbeitet werden kann. Wenn Beutel, Taschen, Becher etc. aus einem so hergestellten Material erzeugt werden sollen, dann muß sich das Material verlieben lassen. Darin eingepackte Produkte müssen ggfs. wasser-, luft- und/oder aromadicht aufbewahrt werden können. Schließlich muß das Material wieder problemlos entsorgt werden können.

Abbaubare Formkörper bzw. Flächengebilde als Verbundmaterialien aus Harnstoffgruppen aufweisenden Polyurethanen und Vernetzern sind bisher nicht bekannt geworden. Mit der nachstehend näher beschriebenen erfindungsgemäßen Verwendung von wäßrigen Dispersionen von Harnstoffgruppen aufweisenden Polyurethanen und Vernetzern sowie von speziellen Zusatzstoffen wird ein einfacher Weg zu solchen Flächengebilden und/oder Formkörpern gewiesen.

Gegenstand der Erfindung ist die Verwendung von wäßrigen Dispersionen von Harnstoffgruppen aufweisenden Polyurethanen zur Herstellung von vollständig biologisch abbaubaren Formkörpern einschließlich Flächengebilden auf Basis cellulosischer Substrate aus A. 0,2 bis 50, vorzugsweise 0,5 bis 10 Gewichtsteilen Polyurethandispersion (Feststoff), B. 100 Gewichtsteilen biologisch abbaubarem Naturstoff und/oder Syntheseprodukt und C. 0,1 bis 20 Gew.-% Vernetzer, bezogen auf A (Feststoff), dadurch gekennzeichnet, daß man als in Wasser dispergierte, Harnstoffgruppen aufweisende Polyurethane nach bekannten Verfahren unter Einhaltung eines Äquivalentverhältnisses von Isocyanatgruppen zu gegenüber Isocyanatgruppen reaktionsfähigen Gruppen von 1:1 bis 2:1 erhältliche Umsetzungsprodukte aus

a) einer Diisocyanatkomponente, bestehend aus

a1) Hexamethylendiisocyanat oder

a2) Gemischen aus Hexamethylendiisocyanat mit insgesamt bis zu 60 Gew.-%, bezogen auf Gemisch a2), 1-Isocyanato-3,3,5-trimethyl-5-isocyanatomethyl-cyclohexan und/oder 4,4'-Diisocyanatodicyclohexylmethan und/oder 1-Methyl-2,4(6)-diisocyanatocyclohexan mit

b) einer Diolkomponente, bestehend aus

b1) mindestens einem Polyesterdiol eines Zahlenmittel- Molekulargewichts von 500 bis 10 000 aus (i) Adipinsäure und/oder Bernsteinsäure und (ii) mindestens einem Alkandiol mit 2 bis 6 Kohlenstoffatomen oder

b2) einem Gemisch derartiger Polyesterdiole mit bis zu 32 Gew.-%, bezogen auf das Gesamtgewicht der Komponente b), an gegebenenfalls Ethergruppen aufweisenden Alkandiolen mit 2 bis 6 Kohlenstoffatomen,

c) einer Diaminkomponente in einer Menge von 2 bis 50 Äquivalent-%, bezogen auf die Gesamtmenge der in den Komponenten b) und c) vorliegenden, gegenüber Isocyanatgruppen reaktionsfähigen Gruppen, bestehend aus

c1) Diaminosulfonaten der Formel

$$H_2N (-CH_2)_n-NH (-CH_2)_m-SO_3Me$$

oder

c2) Gemischen aus Diaminosulfonaten c1) mit bis zu 90 Gew.-%, bezogen auf das Gesamtgewicht der Komponente c), an Ethylendiamin, gegebenenfalls

d) hydrophilen Polyetheralkoholen der Formel

$$H-X-O-R$$

in einer Menge von bis zu 10 Gew.-%, bezogen auf die Summe der Komponenten b), c) und d) sowie gegebenenfalls

e) Wasser, welches nicht in die Berechnung des Äquivalentverhältnisses von Isocyanatgruppen zu gegenüber Isocyanatgruppen reaktionsfähigen Gruppen eingeht,
verwendet, wobei in den genannten Formeln

m und n      unabhängig voneinander für Zahlen von 2 bis 6,

Me      für Kalium oder Natrium,

R      für einen einwertigen Kohlenwasserstoffrest mit 1 bis 12 Kohlenstoffatomen stehen und

X      eine Polyalkylenoxid-Kette des Zahlenmittel-Molekulargewichtsbereichs von 88 bis 4000 bedeutet, deren Alkylenoxideinheiten zumindest zu 40 Mol-% aus Ethylenoxideinheiten und zum Rest aus Propylenoxideinheiten bestehen.

Weiterer Gegenstand der Erfindung sind Verbundmaterialien aus cellulosischen Naturstoffen, den oben definierten biologische abbaubaren Harnstoffgruppen aufweisenden Polyurethanen und Vernetzern.

Wäßrige Dispersionen von Harnstoffgruppen aufweisenden Polyurethanen einer den erfindungsgemäßen Polyurethanen ähnlichen oder vergleichbaren Konstitution sind aus den DE-OS 2 035 732 bzw. 2 651 506 bereits bekannt. In diesen Vorveröffentlichungen fehlt jedoch jeglicher Hinweis auf die Möglichkeit der Herstellung von biologisch abbaubaren und kompostierbaren Formkörpern auf Basis vernetzter Polyurethane.

Der im Rahmen der Erfindung benutzte Begriff "Formkörper" soll auch Flächengebilde wie insbesondere beschichtete, ggfs. mehrlagige Kompositmaterialien umfassen.

Die erfindungsgemäß zugänglichen Formkörper sind vollständig biologisch abbaubar. Dies bedeutet im Rahmen der Erfindung, daß Testfilme der Dicke 0,05 bis 0,5 mm, die beispielsweise durch Auftrocknen einer erfindungsgemäß zu verwendenden Dispersion oder ihrer anwendungstechnischen Mischung auf einer Unterlage oder durch thermoplastische Formgebung von aus erfindungsgemäßen Formkörpern hergestellten Granulaten hergestellt worden sind, den nachstehend beschriebenen Folienkompostiertest mindestens ebensogut wie eine entsprechende Cellulose-Folie bestehen. Diese vollständige biologische Abbaubarkeit hat selbstverständlich auch eine einwandfreie Kompostierbarkeit der Endartikel und der Formkörper zur Folge.

Der im Rahmen der Erfindung benutzte Begriff "wäßrige Dispersion" soll auch wäßrige Lösungen umfassen, die dann vorliegen können, wenn die Konzentration an hydrophilen Zentren in den Harnstoffgruppen aufweisenden Polyurethanen ausreichend hoch ist, um eine Wasserlöslichkeit zu gewährleisten. Oftmals handelt es sich bei den erfin-

dungsgemäß zu verwenden Dispersionen um wäßrige Systeme, die sowohl dispergierte als auch gelöste Harnstoffgruppen aufweisende Polyurethane enthalten.

Zur Herstellung der wäßrigen Dispersionen werden die bereits obengenannten Ausgangsmaterialien a), b), c) und gegebenenfalls d) und/oder gegebenenfalls e) in den genannten Mengenverhältnissen eingesetzt.

Die Diisocyanatkomponente a) besteht vorzugsweise ausschließlich aus Hexamethylendiisocyanat.

Die Diolkomponente b) besteht entweder aus b1) mindestens einem Polyesterdiol oder b2) aus einem Gemisch aus mindestens einem Polyesterdiol b1) mit bis zu 32, vorzugsweise bis zu 10 Gew.-% mindestens eines, gegebenenfalls Ethergruppen aufweisenden Alkandiols mit 2 bis 6 Kohlenstoffatomen.

Geeignete Polyesterdiole b1) sind solche eines (aus dem Hydroxylgruppengehalt errechenbaren) als Zahlenmittel bestimmten Molekulargewichts von 500 bis 10 000, vorzugsweise 1 000 bis 2 500 auf Basis von (i) Adipinsäure und/oder Bernsteinsäure und (ii) gegebenenfalls Ethergruppen aufweisenden Alkandiolen mit 2 bis 6 Kohlenstoffatomen, wie z.B. Ethylenglykol, Diethylenglykol, 1,4-Butandiol, Neopentylglykol und/oder 1,6-Hexandiol. Polyesterdiole, bei deren Herstellung ausschließlich Ethylenglykol und/oder 1,4-Butandiol als Diol eingesetzt worden sind, sind besonders bevorzugt.

Bei den gegebenenfalls als Hydroxylgruppen aufweisenden Kettenverlängerungsmitteln mitzuverwendenden, gegebenenfalls Ethergruppen aufweisenden Alkandiolen mit 2 bis 6 Kohlenstoffatomen handelt es sich um solche der soeben beispielhaft genannten Art, wie sie für die Herstellung von Polyesterdiolen erwähnt worden sind.

Die Diaminkomponente c) besteht entweder aus c1) Diaminosulfonaten der bereits obengenannten allgemeinen Formel oder aus c2) Gemischen derartiger Diaminosulfonate mit Ethylendiamin, welches, falls überhaupt, in Mengen von bis zu 90, vorzugsweise bis zu 70 Äquivalent-%, bezogen auf die gegenüber Isocyanatgruppen reaktionsfähigen Aminogruppen der Komponente c) zum Einsatz gelangt. Ganz besonders bevorzugte Diaminosulfonate sind die Kalium- oder Natriumsalze der N-(2-Aminoethyl)-2-aminoethansulfonsäure.

Die Diaminkomponente c) wird im allgemeinen in einer Menge von 1 bis 10, vorzugsweise 2 bis 5 Gew.-%, bezogen auf das Gewicht der Komponente b) mitverwendet.

Bei der gegebenenfalls mitzuverwendenden Aufbaukomponente d) handelt es sich um hydrophile, einwertige Polyetheralkohole der Formel

$$H\text{-}X\text{-}O\text{-}R$$

in welcher

R und X    die obengenannte Bedeutung haben.

Bevorzugt sind solche derartige Polyetheralkohole, für welche

R    für einen aliphatischen Kohlenwasserstoffrest mit 1 bis 4 Kohlenstoffatomen steht und

X    für eine Polyalkylenoxidkette des Zahlenmittel-Molekulargewichtsbereichs 500 bis 4 000 steht, in welcher mindestens 40, insbesondere mindestens 70 und besonders bevorzugt 100 Mol-% der vorliegenden Alkylenoxideinheiten, Ethylenoxideinheiten und die restlichen Alkylenoxideinheiten Propylenoxideinheiten darstellen.

Die Herstellung derartiger einwertiger Polyetheralkohole geschieht durch an sich bekannte Alkoxylierung geeigneter Startermoleküle R-OH wie beispielsweise Methanol, n-Butanol, n-Hexanol oder n-Dodecanol unter bevorzugter Verwendung von Ethylenoxid und gegebenenfalls Propylenoxid, in den oben gemachten Ausführungen entsprechenden Mengenverhältnissen der Alkylenoxide. Hierbei können die genannten Alkylenoxide als Gemisch und/oder nacheinander zum Einsatz gelangen.

Die einwertigen Polyetheralkohole d) werden beim erfindungsgemäßen Verfahren, falls überhaupt, in Mengen von bis zu 10, vorzugsweise bis zu 3 Gew.-%, bezogen auf die Summe der Komponenten b), c) und d) eingesetzt.

Als weitere, gegebenenfalls in Betracht kommende Aufbaukomponente bei der Herstellung der Harnstoffgruppen aufweisenden Polyurethane ist e) Wasser zu nennen, welches insbesondere dann als Reaktant in Betracht zu ziehen ist, wenn bei der Herstellung der Polyurethane die in letzter Stufe durchzuführende Kettenverlängerungsreaktion von vorab hergestellten NCO-Präpolymeren in wäßrigem Medium erfolgt, insbesondere dann, wenn die in dem Wasser gelösten Diamine c) in, bezogen auf die NCO-Gruppen der NCO-Präpolymeren, in unteräquivalenten Mengen zum Einsatz gelangen.

Neben diesen Aufbaukomponenten kommen im Prinzip auch trifunktionelle Verbindungen in untergeordneten Mengen in Betracht, wie beispielsweise Glycerin oder Trimethylolpropan, die entweder in geringen Mengen in die Polyester b1) eingebaut oder in freier Form als Teil der Komponente b2) zum Einsatz gelangen können. Die Mitverwendung von derartigen verzweigenden Molekülen muß in der Regel durch monofunktionelle Verbindungen ausgeglichen werden, so daß, rein rechnerisch, wieder lineare Polymere resultieren.

Die Herstellung der Harnstoffgruppen aufweisenden Polyurethane aus den beispielhaft genannten Aufbaukomponenten kann nach beliebigen Verfahren erfolgen. Vorzugsweise wird jedoch nach dem bekannten Präpolymerverfahren gearbeitet, und zwar dergestalt, daß man aus den Komponenten b) und gegebenenfalls d) sowie der Diisocyanatkomponente a) unter Einhaltung eines NCO/OH-Äquivalentverhältnisses von 1,5:1 bis 4:1, vorzugsweise 1,8:1 bis 2,5:1 ein NCO-Präpolymer herstellt und dieses anschließend mit der Komponente c) unter Kettenverlängerung zur Reaktion bringt.

Dabei wird das Präpolymer im allgemeinen lösungsmittelfrei bei Temperaturen von 20 bis 150°C hergestellt und anschließend in einem geeigneten Lösungsmittel gelöst. Selbstverständlich kann die Bildung der Präpolymeren auch direkt in einem Lösungsmittel erfolgen. Als Lösungsmittel kommen insbesondere gegenüber Isocyanatgruppen inerte, mit Wasser unbegrenzt mischbare Lösungsmittel in Betracht. Bevorzugt wird Aceton als Lösungsmittel verwendet.

Die so hergestellten Präpolymeren werden in der zweiten Reaktionsstufe mit der Komponente c) unter Kettenverlängerung zur Reaktion gebracht. Hierbei liegt das Äquivalentverhältnis von Isocyanatgruppen der Präpolymeren einerseits zu gegenüber Isocyanatgruppen reaktionsfähigen Aminogruppen der Komponente c) andererseits bei 1:1 bis 20:1, vorzugsweise 1,2:1 bis 4:1. Die Kettenverlängerungsreaktion kann in Lösung, vorzugsweise in acetonischer Lösung, oder auch in wäßrigem Milieu dergestalt erfolgen, daß man die Lösung der Präpolymeren in organischem Lösungsmittel mit einer Lösung der Komponente c) in Wasser unter intensivem Durchmischen vereinigt. Wie bereits angedeutet, erfolgt gegebenenfalls hierbei auch eine Kettenverlängerungsreaktion durch Reaktion der NCO-Gruppen der Präpolymeren mit dem Wasser. Bei der genannten, bevorzugten 2-stufigen Herstellung der Harnstoffgruppen aufweisenden Polyurethane werden die Äquivalentverhältnisse zwischen Isocyanatgruppen und gegenüber Isocyanatgruppen reaktionsfähigen Gruppen der beiden Reaktionsstufen im Rahmen der Offenbarung so gewählt, daß das Gesamtverhältnis von Isocyanatgruppen zu gegenüber Isocyanatgruppen reaktionsfähigen Gruppen der Komponenten b) bis d) dem oben angegebenen Verhältnis von 1:1 bis 2:1 entspricht. Das Wasser geht auf keinen Fall in die Berechnung der genannten Äquivalentverhältnisse ein.

Die Kettenverlängerungsreaktion erfolgt im allgemeinen innerhalb des Temperaturbereichs von 20 bis 50°C.

Grundsätzlich möglich, aber keineswegs bevorzugt, kann die Kettenverlängerungsreaktion auch in der Schmelze, d.h. in Abwesenheit von Lösungsmitteln und von Wasser erfolgen (Schmelzdispergierverfahren).

Zur Herstellung der erfindungsgemäß zu verwendenden Dispersionen werden die kettenverlängerten Polyurethane bzw. ihre Lösungen in organischen Lösungsmitteln, falls die Kettenverlängerungsreaktion in Abwesenheit von Wasser durchgeführt worden war, mit dem Dispergierwasser vermischt, worauf sich gegebenenfalls die destillative Entfernung zumindest eines Teils des gegebenenfalls mitverwendeten Hilfslösungsmittels anschließt. Falls die Kettenverlängerungsreaktion in wäßrigem Milieu erfolgte, kann zur Herstellung der wäßrigen Dispersionen gegebenenfalls weiteres Wasser zugegeben werden. Auch in diesem Fall kann selbstverständlich das verwendete Hilfslösungsmittel gewünschtenfalls destillativ entfernt werden.

Im allgemeinen wird die Gesamtmenge des zum Einsatz gelangenden Wassers so bemessen, daß 5 bis 60 gew.-%ige (vorzugsweise 20 bis 55 gew.-%ige) Dispersionen vorliegen.

Die Polyurethandispersion kann in Gegenwart von üblichen Hilfsmitteln eingesetzt werden. Besonders bevorzugt sind aber solche Hilfsmittel, die ebenfalls bioabbaubar sind. Als solche Hilfsmittel seien vor allem solche natürlicher Herkunft genannt: Gelatine, Eiweißhydrolysate, Guar, Tragant, Mehl, Stärke, Holzmehl, Cellulosepulver usw. Weitere geeignete Zusatzstoffe sind auf mineralischer Basis aufgebaut; diese sind zwar nicht abbaubar, bereiten aber bei der Ausbringung des damit aufgebauten Komposts keine Problem und können sogar zur Bodenverbesserung (pH-Regulator etc.) dienen. Beispiele dafür sind PCC (Precipitated Clay), Calciumcarbonat, Dolomit, Montmorillonit, Talkum, Kaolin, Calciumsulfat, Titan- und Eisenoxid etc.

Die erfindungsgemäßen Mischungen werden im allgemeinen auf die Oberfläche von cellulosischen Materialien aufgetragen. In anderen Fällen kann auch der Masseeinsatz vorgenommen werden.

Vernetzte Polymere sind im allgemeinen. nicht bioabbaubar. Daher ist es äußerst überraschend, daß vernetzte Polyurethane in Gegenwart der cellulosischen Naturprodukte vollständig abbaubar sind. Selbstverständlich kann man nicht beliebig viel Vernetzer in das Polymer einarbeiten. Grundsätzlich kann man alle gängigen Vernetzer für Polyurethandispersionen verwenden (s. z.B. H.Träubel, „Polyurethane Dispersions in Leather Production" 1990, Heft 1, S. 7 ff.). Geeignete Produkte haben N-Methylol-, Isocyanat-, Carbodiimid-, Aziridin-, Epoxid-Gruppen. Die Menge an Vernetzer sollte (auf festes Polyurethan bezogen) 0,1 bis 20, vorzugsweise unter 10 und besonders bevorzugt unter 5 Gew.-% betragen, um gute Wasserfestigkeiten bei gutem Bioabbau zu gewährleisten.

Bezüglich der Verwendung der Dispersionen seien beispielsweise die Verwendung als Lack oder Beschichtungsmasse beliebiger Substrate, als Klebstoff und/oder als Bindemittel für Cellulose zur Herstellung von Verpackungsfolien oder -formkörpern, für Gefäße von „fast food", für Behälter im Gartenbaubereich, Folien zur Aufnahme von Pflanzensamen etc., also von Artikeln, die nach Gebrauch einer Kompostierung zugeführt werden können, aus Baumwolle und/oder Hanf oder Lein, als polymeres Bindemittel für Holz, Holzstaub, oder Holzspäne, als Folien in Verbundwerkstoffen zur Herstellung von biologisch abbaubaren Verpackungen, zur Herstellung von Hygieneartikeln wie z.B. Babywindeln, als Bindemittel zur Herstellung von Pflanztöpfen, als Papierbeschichtungen und zur Masseleimung von Papier zur Herstellung von Wursthüllen und zur Herstellung von kosmetischen Kompositionen erwähnt. Außerdem können auch vollständig biologisch abbaubare und kompostierbare Formkörper wie beispielsweise Flachfolien, Spritzgußartikel wie Blumentöpfe, Trinkgefäße, Eßschalen, Tiefziehartikel, Blisterverpackungen, Blasfolien oder Flaschen hergestellt werden. Die so hergestellten Formkörper zeichnen sich durch hervorragende mechanische Festigkeiten aus.

In den nachfolgenden Beispielen beziehen sich alle Prozentangaben auf das Gewicht, Teile sind Gewichtsteile.

## Beispiele

## Eingesetzte Produkte

| | |
|---|---|
| PERFECTAMYL A 4692 | oxidierte, niedrigviskose, schwach anionische Kartoffelstärke der Firma Avebe, Meerbusch |
| ACRAFIX MF | Vernetzer auf N-Methylolmethylmelaminbasis der Bayer AG, Leverkusen |
| ACRAFIX ML | N-Methylolgruppen enthaltender polyfunktioneller Vernetzer der Bayer AG, Leverkusen |
| MIROX AM | Verdicker auf Polyacrylsäurebasis der Fa. Stockhausen GmbH, Krefeld |
| RETAMINOL F | Retentionsmittel der Bayer AG, Leverkusen auf Basis einer wäßrigen Zubereitung eines Cyanamid-Polyamin-Kondensationsproduktes |

## Testmethoden

TBL = Trockenbruchlast, gemessen nach DIN 53 112 Teil 1

NBL = Naßbruchlast, gemessen nach DIN 53 112 Teil 2

Cobb = Bestimmung der Wasseraufnahme in $g/m^2$ nach Cobb (DIN 53 132)

**Biologische Abbaubarkeit:** Zur Bestimmung der biologischen Abbaubarkeit der in den nachstehenden Beispielen beschriebenen Polyurethane wurde wie folgt verfahren:

## Folienkompostiertest

Die zu testenden Folien wurden zunächst bei 80°C bis zur Gewichtskonstanz getrocknet und dann in 6x6 cm Diarahmen eingespannt. Kompost aus einer Kompostieranlage wurde 2 cm hoch in Plastikschalen gefüllt und die Folien darin eingelegt. Die gefüllten Kästen wurden in einem Brutschrank für jeweils 4 Wochen nacheinander bei 60, 50 und 37°C inkubiert. Wasserverluste wurden regelmäßig über den Gewichtsverlust bestimmt und ausgeglichen. Während der Inkubation wurde einmal pro Woche der pH-Wert des Komposts gemessen. Nach jeweils 4 Wochen wurde ein Ansatz abgebrochen, die Folien entnommen, gereinigt und bei 80°C bis zur Gewichtskonstanz getrocknet. Unmittelbar nach dem Trocknen wurde der Gewichtsverlust der Folie durch erneutes Wiegen bestimmt.

Für eine "vergiftete" Kontrolle wurde der Kompost bei 105°C getrocknet, das dabei verdampfte Wasser wurde dann durch eine 1 %ige wäßrige $HgCl_2$-Lösung ersetzt. Die Folien für die vergiftete Kontrolle wurden vor dem Einbringen in das Kompostgemisch in die $HgCl_2$-Lösung eingelegt, getrocknet und dann in den vergifteten Kompost eingebracht. Der Kontrollansatz wurde genauso inkubiert wie die anderen Ansätze.

Ein Kunststoff wird entsprechend DIN 54 900-1 (Entwurf) als abbaubar bezeichnet, wenn eine daraus hergestellte Folie in den mikrobiell aktiven Ansätzen ebenso wie die in einem Parallelversuch eingesetzte Cellulose-Folie völlig verschwand und in der vergifteten Kontrolle erhalten blieb.

## Headspace-Test

10 g durchgerotteter Kompost (bezogen auf Trockengewicht) aus einer Kompostieranlage wurden mit 1 bis 2 g Polymer sehr gründlich vermischt. Anschließend wurde das Polymer/Kompost-Gemisch befeuchtet und wiederum gründlich vermischt. Der endgültige Wassergehalt des Polymer/Kompost-Gemisches sollte ca. 45 bis 55 % betragen. Das Polymer/Kompost-Gemisch wurde in eine Flasche mit einem Liter Volumen gefüllt, welche gasdicht zu verschließen war und aus der über ein Septum eine Gasprobe zu entnehmen war. In Kontrollansätzen wurde die gleiche Menge Kompost ohne Polymer eingesetzt. Nach Einfüllen des Polymer/Kompost-Gemisches in die Flaschen wurden diese für 20 bis 30 Minuten mit reinem $O_2$ gefüllt. Nach der Begasung wurde die Flasche gasdicht verschlossen und der beim Begasen eintretende Wasserverlust durch Einspritzen von $H_2O$ dest. durch das Septum ausgeglichen. Zur Simulation von Rottebedingungen erfolgte die Inkubation der Flaschen bei 55°C.

In Abständen von ein bis zwei Wochen wurde das gebildete $CO_2$ mittels Gaschromatographie bestimmt; nach der Gasmessung wurde die Begasung erneut durchgeführt. Aus der gebildeten Menge an $CO_2$ und dem Kohlenstoffgehalt des Polymers kann der prozentuale Abbaugrad bestimmt werden.

Ein Kunststoff wurde in diesem Test als abbaubar bezeichnet, wenn sein Abbau hinsichtlich Geschwindigkeit und Umfang dem von Cellulose entsprach.

**Kontrollierter Kompostier-Test**

Der kontrollierte Kompostier-Test wurde gemäß DIN 54 900-1 (Entwurf) durchgeführt.

Bis zu 100 g fein gemahlenes Polymermaterial wurden mit 1 000 g Kompost (Rottegrad 4) aus einer Kompostieranlage vermischt. Das Gemisch wurde in Gefäße mit einem Volumen von 3 l eingefüllt und über einen Gaseinläß kontinuierlich mit Luft begast. Die Gefäße wurden auf 58°C temperiert. Im Gasausläß wurde kontinuierlich über einen IR-Detektor die $CO_2$-Konzentration gemessen, daneben wurde die Fließgeschwindigkeit des Gases bestimmt. Aus beiden Werten konnte die Menge an gebildetem $CO_2$ errechnet werden. Durch Korrektur gegenüber einer Kontrolle ohne Polymer konnte der Abbaugrad bestimmt werden.

Ein Kunststoff wurde in diesem Test als abbaubar bezeichnet, wenn sein Abbau hinsichtlich Geschwindigkeit und Umfang dem von Cellulose entsprach.

**Beispiel 1**

83,4 g eines Polyesters aus Adipinsäure, Ethandiol und 1,4-Butandiol im Gewichtsverhältnis Ethandiol : Butandiol = 1,4:1 des Molekulargewichts $\overline{M}_n$ 2000 und 3 g eines einwertigen Polyetheralkohols des Molekulargewichts $\overline{M}_n$ 2240, hergestellt durch Alkoxylierung von n-Butanol unter Verwendung eines Gemisch aus Propylenoxid und Ethylenoxid im Molverhältnis PO:EO = 1:7,1 werden zusammen 30 Minuten bei 120°C und Vakuum entgast. Unter Stickstoff werden dem Ansatz 0,1 g Benzoylchlorid und 13,7 g Hexamethylendiisocyanat in einem Guß zugeführt. Nach 1 Std. Rühren bei 120°C beträgt der NCO-Gehalt 2,84 %. Das Präpolymer wird bei 50°C in 300 g Aceton gelöst und bei Raumtemperatur eine Mischung aus 4,8 g einer 50 %igen wäßrigen Lösung des Natriumsalzes der N-(2-Aminoethyl)-2-aminoethansulfonsäure (AAS-Salz) und 1,15 g Ethylendiamin und 20 g Wasser zugegeben. Nach 15 Minuten wird mit 230 g Wasser versetzt und das Aceton bis 60°C und 140 mbar entfernt. Als Destillationsrückstand verbleiben 337 g einer dünnflüssigen, weißen Dispersion mit 30 % Polyurethan.

Eine Probe der Dispersion wird auf einer Glasplatte getrocknet. Man erhält eine klare, klebfreie Folie mit einer Reißdehnung von mehr als 300 %. Die Schichtdicke beträgt 0,25 mm.

Die Folie wurde im Folienkompostiertest innerhalb von 8 Wochen vollständig abgebaut. Gemäß Head-Space-Test wurden nach 90 Tagen 85 % des eingesetzten Kohlenstoffs aus dem Prüfmaterial zu $CO_2$ umgesetzt.

**Beispiel 2**

81,5 g des Polyesterdiols gemäß Beispiel 1 und 2,9 g des einwertigen Polyetheralkohols gemäß Beispiel 1 werden zusammen 30 Minuten bei 120°C im Vakuum entgast. Unter Stickstoff werden dem Ansatz 0,1 g Benzoylchlorid und in einem Guß das Gemisch aus 6,7 g Hexamethylendiisocyanat und 8,8 g Isophorondiisocyanat zugeführt. Nach 1 Stunde Rühren bei 100°C beträgt der NCO-Gehalt 3,05 %. Das Präpolymer wird bei 50°C in 300 g Aceton gelöst und bei Raumtemperatur unter schnellem Rühren eine Mischung aus 4,8 g einer 50 %igen wäßrigen Lösung von AAS-Salz und 1,36 g Ethylendiamin und 20 g Wasser zugegeben. Nach 15 Minuten versetzt man mit 230 g Wasser und entfernt das Aceton bis 50°C und 120 mbar. Als Destillationsrückstand verbleiben 362 g einer 29,6 %igen dünnflüssigen, weißen Dispersion.

Eine Probe der Dispersion wird auf einer Glasplatte zu einer 0,25 mm dicken, klaren Folie getrocknet, deren Reißdehnung mehr als 300 % beträgt.

Im Folienkompostiertest erfolgte der Abbau innerhalb von 3 Monaten.

**Beispiel 3**

170 g eines Polyesterdiols des Molekulargewichts $\overline{M}_n$ 1700 aus Adipinsäure und einem Gemisch aus 1,6-Hexandiol und Neopentylglykol im Gewichtsverhältnis 1,9:1 werden 60 Minuten bei 120°C im Vakuum entgast. Unter Stickstoff werden dem Ansatz 0,2 ml Benzoylchlorid und in einem Guß 30,1 g Hexamethylendiisocyanat zugeführt. Nach 30 Minuten Rühren bei 120°C beträgt der NCO-Gehalt 3,2 %. Man löst das Präpolymer bei 50°C in 500 g Aceton, kühlt auf Raumtemperatur und gibt unter schnellem Rühren eine Mischung aus 9,7 g einer 50 %igen wäßrigen Lösung von AAS-Salz und 1,51 g Ethylendiamin und 20 g Wasser zur acetonischen Lösung. Nach 15 Minuten Rühren wird mit 300 g Wasser versetzt und das Aceton bis 60°C und 140 mbar entfernt. Als Destillationsrückstand verbleiben 505 g. Nach dem Verdünnen mit 11 g Wasser erhält man eine 40 %ige, dünnflüssige, weiße Polyurethanharnstoffdispersion.

Eine Probe der Dispersion wird mit Wasser verdünnt, auf eine Glasplatte gegossen und getrocknet. Man erhält eine klare, klebfreie Folie mit einer Reißdehnung von mehr als 200 %. Die Schichtdicke beträgt 0,25 mm.

Im Folienkompostiertest erfolgte der Abbau innerhalb von 2 Monaten. Im kontrollierten Kompostier-Test gemäß DIN Prüfraster Teil 4 (DIN FNK AA 103.3) wurde innerhalb von 55 Tagen 90 % zu $CO_2$ umgesetzt. Gemäß Headspace-Test wurden innerhalb von 87 Tagen 85 % zu $CO_2$ umgesetzt.

**Beispiel 4** (Vergleichsbeispiel)

200 g eines Polyesterdiols des Molekulargewichts $\overline{M}_n$ 2000 aus Phthalsäure und Ethandiol werden 30 Minuten bei 120°C im Vakuum entgast. Unter Stickstoff werden dem Ansatz 0,3 ml Benzoylchlorid und in einem Guß 30,2 g Hexamethylendiisocyanat zugeführt. Nach 40 Minuten Rühren bei 120°C bis 140°C beträgt der NCO-Gehalt 2,65 %. Das Präpolymer wird bei 50°C in 500 g Aceton gelöst und bei Raumtemperatur unter schnellem Rühren eine Mischung aus 27,4 g einer 50 %igen, wäßrigen Lösung von AAS-Salz und 50 g Wasser zugegeben. Nach 10 Minuten Rühren wird mit 509 g Wasser versetzt und das Aceton bis 50°C und 140 mbar entfernt. Als Destillationsrückstand verbleiben 781 g. Nach Verdünnen mit 28 g Wasser erhält man eine 30 %ige dünnflüssige, weiße Polyurethanharnstoffdispersion.

Eine Probe der Dispersion wird auf einer Glasplatte zu einer klaren, liebfreien Folie mit 0,25 mm Schichtdicke getrocknet.

Im Folienkompostiertest konnte kein Abbau festgestellt werden.

**Anwendungsbeispiele 1 - 11**

Mit den folgenden Versuchen wurden einerseits Folien, andererseits beschichtete Papiere hergestellt: (Kraft)Papiere (Versuch 1 - 11) beschichtet. Auftragsmenge 30 g/m$^2$ (fest). Rakel

| Anwendungsbeispiel Nr. | 1 | 2 | 3 | 4 | 5 | 6 |
|---|---|---|---|---|---|---|
| Polyurethandispersion aus Beispiel 3 | 100 | 100 | 90 | 75 | 75 | 50 |
| Stärkelösung 40% ig heiß (bei 40°C) eingerührt | 0 | 0 | 10 | 25 | 75 | 50 |
| ACRAFIX MF Formaldehydabspalter | 0,8 | 2 | 0,8 | 0,8 | 0.8 | 0,8 |
| MIROX AM Verdicker + Ammoniak | 1,5 | 1,5 | 0 | 0 | 0 | 0 |
| Wasser | 0 | 0 | 0 | 5 | 30 | 15 |
| Cobb-Wert 8h | 55 | 67 | 76 | 90 | 81 | 105 |
| Trockenbruchlast des beschichteten Papiers (N) | 138 | 138 | 116 | 148 | 141 | 141 |
| Naßbruchlast (N) | 21 | 24,4 | 16,3 | 17,8 | 14,1 | 14,7 |

Aus den Mischungen wurden einerseits 0,2 mm starke Folien gezogen (Versuche 1 - 7) und andererseits Papier beschichtet. Die Vernetzer enthaltenden Beschichtungen und Folien wurden durch 2 minütige Kondensation 150°C ausreagiert.

Die sieben Folien (nicht die beschichteten Papiere, da feststeht, daß Cellulose bioabbaubar ist) wurden in der Folienkompostierung untersucht. Dabei werden die zu prüfenden Folien in 6 x 6 cm Diarahmen eingespannt und für 3 Monate in Kompost inkubiert. Nach 1 bzw. 3 Monaten werden die Folien entnommen und auf mikrobiellen Abbau visuell begutachtet; sofern möglich wird zudem der Gewichtsverlust bestimmt. Daneben wird eine vergiftete Kontrolle mitgeführt, in der die Folien unter den gleichen Bedingungen inkubiert werden; Bakterien oder Pilze können hier allerdings nicht wachsen.

| Folienbezeichnung | 1. Monat | vergiftete Kontrolle nach 3 Monaten |
|---|---|---|
| | Gewichtsverlust in Prozenten (%) | |
| 1 | 81,7 | 57,4 |
| 2 | 82,2 | 45,6 |

(fortgesetzt)

| Folienbezeichnung | 1. Monat | vergiftete Kontrolle nach 3 Monaten |
|---|---|---|
| | Gewichtsverlust in Prozenten (%) | |
| 3 | 80,5 | 78,2 |
| 4 | 84,9 | 87,7 |
| 5 | 86,9 | 53,0 |
| 6 | 91,9 | 66,0 |
| 7 | 91,6 | 62,8 |

Die Werte sind wie folgt zu interpretieren:

Alle auch die Vernetzer enthaltenden Proben zeigten Abbau; dieser verlief sehr schnell und war bereits nach 4 Wochen weitgehend abgeschlossen. Auch in der vergifteten Kontrolle war ein (allerdings geringerer) Abbau zu beobachten, der möglicherweise auch durch eine nichtbiologische Hydrolyse der Bindungen im Polymer bedingt war. Tedenziell war dieser (abiotische) Zerfall des Polymers aber geringer als der tatsächliche mikrobielle Abbau.

Die nach dieser Untersuchung getesteten Typen verhalten sich hinsichtlich der Abbaubarkeit ähnlich wie Zellglas (reine Cellulose) oder andere biologisch vollständig abbaubare Polymere, wie z. B. Polycaprolacton.

### Tabelle: Anwedungsbeispiele 12 - 18

**Einsatz der erfindungsgemäßen Mischungen in der Masse**

(Mengenangaben in Gew.-%, bezogen auf Kiefer-/Birkensulfat, d.h. auf Cellulose)

| Masseeinsatz (Rapid Köthen) | | | | | | | | | | |
|---|---|---|---|---|---|---|---|---|---|---|
| Stoff: Kiefer-/Birkensulfat 80:20 | | | | | | | | | | |
| Mahlgrad 38° SR | | | | | | | | | | |
| flächenbez. Masse: ca. 80 g/qm | | | | | | | | | | |
| Verweilzeit 5 min | | | | | | | | | | |
| Einsatz: 3 g / Liter | | | | | | | | | | |
| Versuch | 1 | 2 | 3 | 4 | 5 | 6 | 7 | 8 | Vgl. 1 | Vgl. 2 |
| Retaminol F | 2,5 | 2,5 | 2,5 | 2,5 | 2,5 | 2,5 | 2,5 | 2,5 | 2,5 | 2,5 |
| 90 Tl. Dispersion* + 10 Tl. Perfectamyl A 4692 (40 %) + 0,8 Tl. Acrafix ML | 3 | 10 | | | | | | | | |
| 75 Tl. Dispersion* + 25 Tl. Perfectamyl A 4692 (40 %) + 0,8 Tl. Acrafix ML + 5 Tl. Wasser | | | 3 | 10 | | | | | | |
| 25 Tl. Dispersion* + 75 Tl. Perfectamyl A 4692 (40 %) + 0,8 Tl. Acrafix ML + 30 Tl. Wasser | | | | | 3 | 10 | | | | |
| 50 Tl. Dispersion* + 50 Tl. Perfectamyl A 4692 (40 %) + 0,8 Tl. Acrafix ML + 15 Tl. Wasser | | | | | | | 3 | 10 | | |
| | | | | | | | | | | |
| 100 Tl. Dispersion* | | | | | | | | | 3 | 10 |
| TBL | 81,8 | 79,5 | 88,7 | 84 | | 90,5 | 87,9 | 90,9 | 82 | 92,7 |
| NBL | 0,3 | 0,3 | 0,3 | 0,3 | | 0,3 | 0,3 | 0,3 | 0,3 | 0,3 |
| FG | 86 | 86 | 86 | 85 | | 84 | 85 | 85 | 85 | 85 |

\* 50 %ige wäßrige Polyurethandispersion gemäß Beispiel 3

Die Ergebnisse zeigen, daß der Einsatz der Produkte in der Masse nicht ganz so effektiv ist wie auf der Oberfläche. Es kann aber weiterhin gezeigt werden, daß die Trockenbruchlast durch Einsatz von erfindungsgemäßen Polyurethan-

EP 0 841 432 A1

dispersionen und deren Mischungen mit Stärke signifikant erhöht werden kann.

**Patentansprüche**

1. Verwendung von wäßrigen Dispersionen von Harnstoffgruppen aufweisenden Polyurethanen zur Herstellung von vollständig biologisch abbaubaren Formkörpern einschließlich Flächengebilden auf Basis cellulosischer Substrate aus

A. 0,2 bis 50 Gewichtsteilen
Polyurethandispersion (Feststoff),
B. 100 Gewichtsteilen
biologisch abbaubarem Naturstoff und/oder Syntheseprodukte und
C. 0,1 bis 20 Gew.-%
Vernetzer, bezogen auf A (Feststoff),

dadurch gekennzeichnet, daß man als in Wasser dispergierte, Harnstoffgruppen aufweisende Polyurethane nach bekannten Verfahren unter Einhaltung eines Äquivalentverhältnisses von Isocyanatgruppen zu gegenüber Isocyanatgruppen reaktionsfähigen Gruppen von 1:1 bis 2:1 erhältliche Umsetzungsprodukte aus

a) einer Diisocyanatkomponente, bestehend aus

a1) Hexamethylendiisocyanat oder

a2) Gemischen aus Hexamethylendiisocyanat mit insgesamt bis zu 60 Gew.-%, bezogen auf Gemisch a2), 1-Isocyanato-3,3,5-trimethyl-5-isocyanatomethyl-cyclohexan und/oder 4,4'-Diisocyanatodicyclohexylmethan und/oder 1-Methyl-2,4(6)-diisocyanatocyclohexan mit

b) einer Diolkomponente, bestehend aus

b1) mindestens einem Polyesterdiol eines Zahlenmittel- Molekulargewichts von 500 bis 10 000 aus (i) Adipinsäure und/oder Bernsteinsäure und (ii) mindestens einem Alkandiol mit 2 bis 6 Kohlenstoffatomen oder

b2) einem Gemisch derartiger Polyesterdiole mit bis zu 32 Gew.-%, bezogen auf das Gesamtgewicht der Komponente b), an gegebenenfalls Ethergruppen aufweisenden Alkandiolen mit 2 bis 6 Kohlenstoffatomen,

c) einer Diaminkomponente in einer Menge von 2 bis 50 Äquivalent-%, bezogen auf die Gesamtmenge der in den Komponenten b) und c) vorliegenden, gegenüber Isocyanatgruppen reaktionsfähigen Gruppen, bestehend aus

c1) Diaminosulfonaten der Formel

$$H_2N (-CH_2)_n-NH (-CH_2)_m-SO_3Me$$

oder

c2) Gemischen aus Diaminosulfonaten c1) mit bis zu 90 Gew.-%, bezogen auf das Gesamtgewicht der Komponente c), an Ethylendiamin, gegebenenfalls

d) hydrophilen Polyetheralkoholen der Formel

$$H-X-O-R$$

in einer Menge von bis zu 10 Gew.-%, bezogen auf die Summe der Komponenten b), c) und d) sowie gegebenenfalls

e) Wasser, welches nicht in die Berechnung des Äquivalentverhältnisses von Isocyanatgruppen zu gegenüber Isocyanatgruppen reaktionsfähigen Gruppen eingeht,

11

verwendet, wobei in den genannten Formeln

m und n     unabhängig voneinander für Zahlen von 2 bis 6,

Me     für Kalium oder Natrium,

R     für einen einwertigen Kohlenwasserstoffrest mit 1 bis 12 Kohlenstoffatomen stehen und

X     eine Polyalkylenoxid-Kette des Zahlenmittel-Molekulargewichtsbereichs von 88 bis 4000 bedeutet, deren Alkylenoxideinheiten zumindest zu 40 Mol-% aus Ethylenoxideinheiten und zum Rest aus Propylenoxideinheiten bestehen.

2. Verwendung gemäß Anspruch 1, dadurch gekennzeichnet, daß man als in Wasser dispergierte Polyurethane solche verwendet, die in zweistufiger Reaktion durch Umsetzung der Ausgangskomponenten a), b) und gegebenenfalls d) unter Einhaltung eines NCO/OH-Äquivalentverhältnisses von 1,5:1 bis 4:1 zu einem NCO-Präpolymeren und anschließende Kettenverlängerungsreaktion dieses NCO-Präpolymeren mit einer wäßrigen Lösung der Komponente c) hergestellt worden sind.

3. Verwendung gemäß Anspruch 1 und 2, dadurch gekennzeichnet, daß man solche in Wasser dispergierte, Harnstoffgruppen aufweisende Polyurethane verwendet, bei deren Herstellung

als Komponente a) ausschließlich Hexamethylendiisocyanat,

als Komponente b) ausschließlich Polyesterdiole auf Adipinsäure-Basis und

als Komponente c) ausschließlich c1) die Kalium- oder Natrium-Salze der N-(2-Aminoethyl)-2-aminoethansulfonsäure oder c2) Gemische derartiger Salze mit Ethylendiamin
verwendet worden sind.

4. Verbundmaterialien aus cellulosischen Naturstoffen, biologisch abbaubaren Harnstoffgruppen aufweisenden Polyurethanen und Vernetzern.

Europäisches
Patentamt

**EUROPÄISCHER RECHERCHENBERICHT**

Nummer der Anmeldung

EP 97 11 8484

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,P, A | DE 195 17 185 A (BAYER AG) 14.November 1996<br>* Ansprüche 1-3 *<br>* Seite 4, Zeile 49 - Zeile 67 *<br>--- | 1 | D21H19/24<br>C08J5/18<br>C08G18/08<br>C08G18/42<br>C08G18/28<br>C08G18/10<br>C08G18/83<br>//C08L75:04 |
| D,A | EP 0 593 975 A (BAYER AG)<br>* Ansprüche 1-4 *<br>--- | 1 | |
| A | FR 2 103 036 A (BAYER AG)<br>* Ansprüche 1-3 *<br>* Beispiele 3,4 *<br>--- | 1 | |
| A | US 3 983 291 A (CHANG JOE H-S)<br>* Ansprüche 1-6 *<br>* Spalte 7, Zeile 56 - Spalte 8, Zeile 62 *<br>----- | 1 | |

RECHERCHIERTE SACHGEBIETE (Int.Cl.6)

D21H
C08J
C08G

Der vorliegende Recherchenbericht wurde für alle Patentansprüche erstellt

| Recherchenort | Abschlußdatum der Recherche | Prüfer |
|---|---|---|
| DEN HAAG | 4.Februar 1998 | Van Puymbroeck, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)